# EUROPEAN PATENT SPECIFICATION

(11) **EP 1 102 480 B1**
(45) Date of publication and mention of the grant of the patent: **20.04.2005**
(21) Application number: 01101582.3
(22) Date of filing: 09.11.1996
(51) Int. Cl.: H04N 5/445, H04N 7/173

(54) **A method for locating a program by searching in a program guide according to search criteria**
Verfahren zur Lokalisierung einer Sendung durch suchen in einem Programmführer nach Suchkriterien
Procédé permettant de repérer un programme en cherchant dans un guide de programmes selon les critères de recherche

(30) Priority: 17.11.1995 US 6889; 15.12.1995 US 574440
(43) Date of publication of application: 23.05.2001
(62) Divisional of application: 96117991.8
(73) Proprietor: THOMSON CONSUMER ELECTRONICS, INC., Indianapolis, IN 46290-1024 (US)
(72) Inventor: Maze, Kenneth Wayne, 92648 Boulogne Cedex (FR); Miller, Robert Howard, 92648 Boulogne Cedex (FR); Reavis, Jeffrey Philip, 92648 Boulogne Cedex (FR); Crosby, Sheila Renee, 92648 Boulogne Cedex (FR); Wehmeyer, Keith Reynolds, 92648 Boulogne Cedex (FR); Brown, Megan Louise, 92648 Boulogne Cedex (FR); Morrison, Hugh Boyd, 92648 Boulogne Cedex (FR)
(74) Representative: Kohrs, Martin

(56) References cited:
- WO-A-93/22877
- WO-A-94/14282
- BESTLER C: "FLEXIBLE DATA STRUCTURES AND INTERFACE RITUALS FOR RAPID DEVELOPMENT OF OSD APPLICATIONS" PROCEEDINGS FROM ELEVEN TECHNICAL SESSIONS OF THE ANNUAL CONVENTION AND EXPOSITION OF THE NATIONAL CABLE TELEVISION ASSOCIATION. SAN FRANCISCO, JUNE 6 - 9, 1993, PROCEEDINGS OF THE ANNUAL CONVENTION AND EXPOSITION, WASHINGTON, NCTA, US, vol. CONVENTION 42, 6 June 1993 (1993-06-06), pages 223-236, XP000410503 San Fransisco, CA, US

## Description

The subject invention concerns a method for searching a program in a program guide of a television system.

The programming of modern television systems, such as TV schedulers, VCRs, and Satellite Receivers has become more complicated in that the number of available channels has increased dramatically of late. For example RCA® DSS® direct broadcast satellite receivers provide as many as 150 channels to choose from. Heretofore, a user who wanted to record a specific non-regularly scheduled television program such as the airing of a particular movie, would regularly consult a television schedule printed in his local newspaper in the hope that he would eventually find that movie listed.

Such a practice may work well when there are only a few television channel schedules to examine, however, it is unlikely that a viewer would be able to examine the complete schedules for 150 television channels each week. Such a task would be daunting even if all of the movies were to be listed separately, as some television program listings do. Consequently, it is felt that as the number of channels increases, the chances of successfully locating a single occurrence of a program (like a needle in a haystack) becomes more and more unlikely.

Document WO-94/14282 discloses a set top terminal for cable television delivery systems. It describes how to access desired programs, by means of several successive submenu screens.

That technique is adapted to searches of wanted programs, through successive refining of the searching criteria, even if the data on which the search is based are not directly visible in a program guide on screen.

Likewise, document WO-93/22877 relates to interactive home information system, and deals notably with program guide interactive television service relying on menus. The subscriber may thus display on screen a "Smart TV" selection, which permits him to find programs and movies for example by subject, by show or by actor, while such information is not necessarily visible on screen when the program guide grid is displayed. Special submenu selections include selecting a first group of letters, and then a given letter from that group for lower level submenu, in order to conduct the search. A scrolling through the final list of selections then enables to choose an element of that list for the basis of a search (here, "Bogart").

Like document WO-94/14282, the prior art WO-93/22877 exploits access to information in the program guide database, through menu driven searches.

However, given the increasing number of available programs, this may require significant operations by the user, without necessarily offering to him much flexibility.

The invention relates to a method and a device for automatically searching program guide information and identifying particular program selections that satisfy criteria provided by a user viewing said program guide, which may sensibly alleviate the operations by the user and may enable more flexible searches.

In a television system in which at least program title information for programs which are to be transmitted in the future is transmitted in advance to form a channel guide listing, apparatus is provided for searching the listing for specific user-entered information, and upon successful conclusion to the search, the apparatus schedules the tuning of the desired program, or in the alternative, notifies the viewer of the availability of the program. In those instances where descriptive text accompanies the program listing, apparatus of the invention performs a search of the text for a particular text string which may relate to the title, the star, the director, or the context of the program, among other search criteria.

The present invention relates to a method for automatically searching program guide information as defined in claim 1.

The present invention relates also to a device for automatically searching program guide information as defined in claim 10.

Other features and advantages of the present invention will become more clearly apparent from reading the following description given with reference to the appended drawings in which:
FIGURES 1a-1c are illustrations of a screen display of a portion of a channel guide, in accordance with one aspect of the invention.
FIGURE 2 is an illustration of a screen display showing a search request screen in accordance with another aspect of the invention.
FIGURE 3 is an illustration of a screen display of a portion of a channel guide showing auxiliary program information.
FIGURE 4 is an illustration in block diagram form of apparatus suitable for use with the invention.
FIGURE 5 is an illustration of a search request list in accordance with the subject invention.
FIGURE 6 is an illustration of a screen display useful for entering text search phrases in accordance with the invention.
FIGURE 7 is a flowchart useful in understanding the invention.

Television systems such as the RCA® DSS@ direct broadcast satellite system and Starsight® transmit channel guides for display on the television receivers of subscribers.

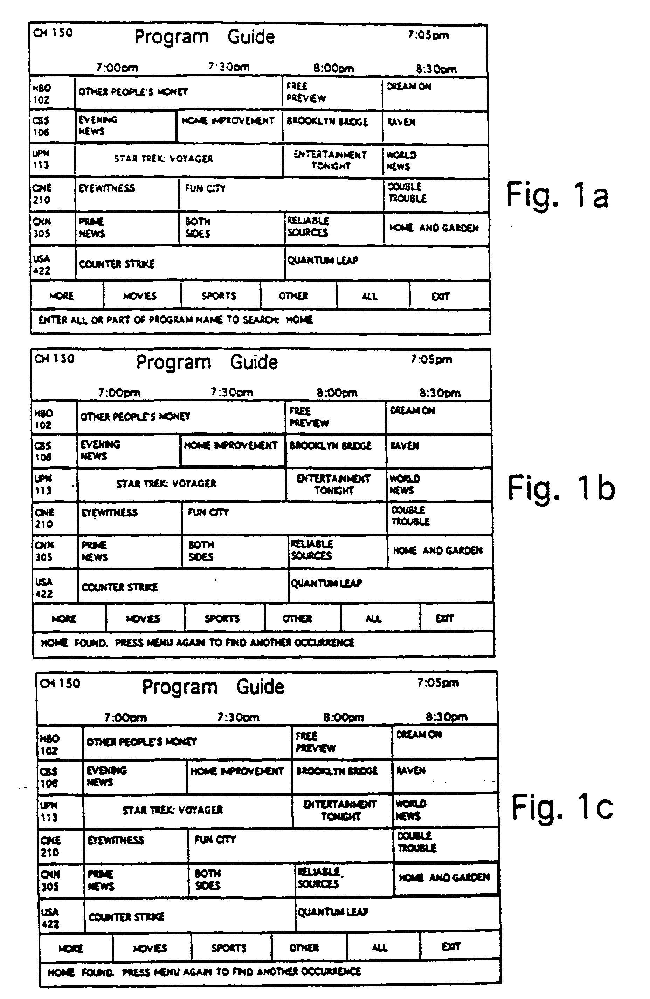

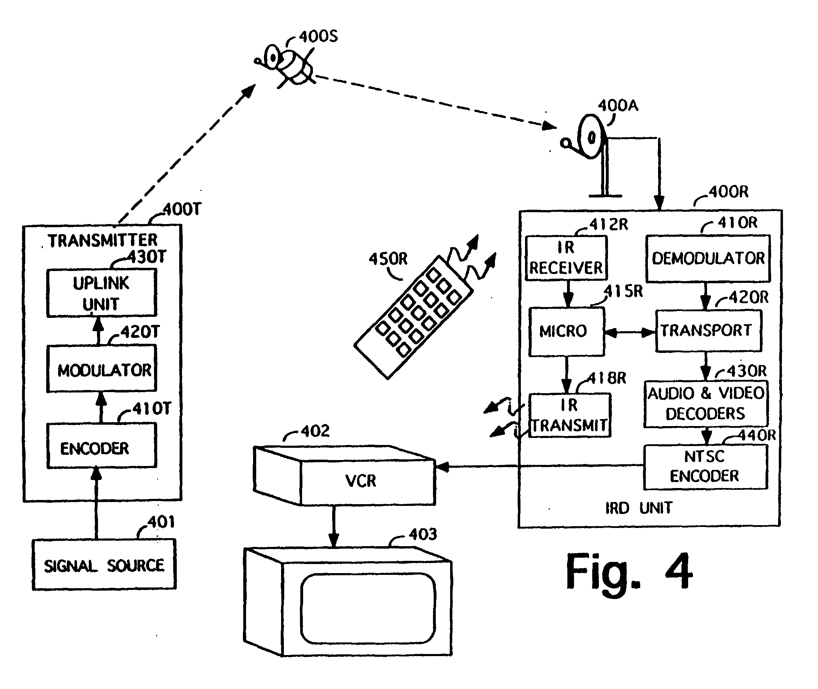

FIGURES 1a-1c show Program Guide screen displays produced, for example, by an RCA® DSS® direct broadcast satellite receiver system, manufactured by Thomson Consumer Electronics, Inc. Indianapolis, IN. A user selects a television program from a Program Guide for viewing, by moving a cursor (via operation of remote control up, down, right, and left, direction control keys, not shown) to a block of the program guide screen display which contains the name of the desired program. When a SELECT key on the remote control is pressed, the current x and y position of the cursor is evaluated to derive virtual channel and program time information. In this example of FIGURE 1a, a particular television show, EVENING NEWS has been highlighted for selection by use of the cursor keys on a remote control unit (e. g., 450R of FIGURE 4). The highlighting is illustrated by the dark box outlining the title in FIGURES 1a-1c. Normally, upon pressing the select key, the relevant programming data is transferred to a programming unit.

However, note the phrase "ENTER ALL OR PART OF A PROGRAM NAME TO SEARCH" which appears at the bottom of FIGURE 1a. In this case the word "HOME" has been entered by a user. Upon pressing the MENU key, a search of the channel guide information is performed for the next occurrence of a television program including the word "HOME" in its title. At the completion of the search, the screen display of FIGURE 1b is generated. Note that a television program on channel 106 entitled "HOME IMPROVEMENT" is now highlighted. If desired, a further search can be initiated by pressing the MENU key again. The result of that further search is shown in the screen display of FIGURE 1c. Note that in FIGURE 1c, a television program on channel 305, "HOME AND GARDEN" is highlighted, because that title includes the word "HOME", and thus satisfies the search criteria. The subject apparatus can also perform "substring searching" wherein the keyword (search term) is contained within another word. For example, a substring search on the word HOME would find the movie title "HOMEWARD BOUND". Similarly, the search can be made case sensitive, or case insensitive, as desired.

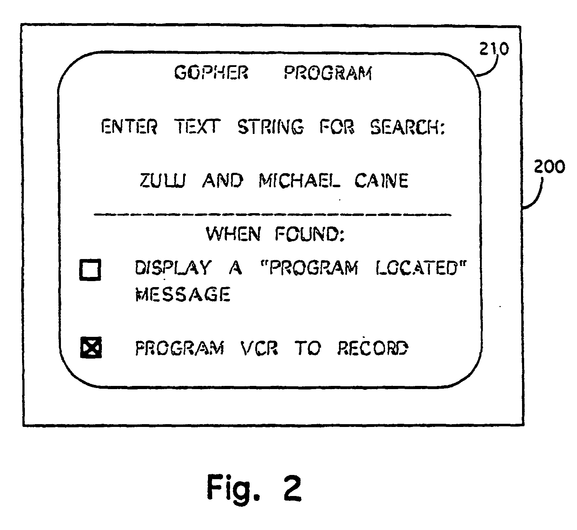

FIGURE 2 shows a "GOPHER PROGRAM" screen display 210 useful for entering text to be searched, and for entering instructions to be executed in the event that the search is terminated. The search entered on screen display 210 will perform the logical "AND" function on the search terms "ZULU" (a movie title) and "MICHAEL CAINE" (one of ZULU'S stars). While a logical "AND" function is shown, logical "OR" and "NOT" functions are also envisioned. In fact, a logical "OR" function could simply be performed by entering the search terms as two different searches. That is, if the search term "ZULU" were entered by itself, the movie "ZULU" AND any television program concerning the ZULU tribe would be selected. If the search term "MICHAEL CAINE" were entered as a separate search, the movie "ZULU" and any other movie starring Michael Caine would be selected.

Note from screen display 210, that when the movie "ZULU" is found, it is to be recorded. That is, after entering the search terms and instructions via screen display 210, the user does not have to perform any further function (other than ensuring that the VCR has a tape in it) to secure a recording of the movie "ZULU" whenever it is aired. At the proper time the apparatus of the invention will transmit the record commands to the VCR, automatically. Alternatively, the user may have checked the box labelled DISPLAY A "PROGRAM LOCATED" MESSAGE, in which case the show will not be recorded, but rather a reminder will be displayed indicating that the search has successfully terminated upon finding the requested item.

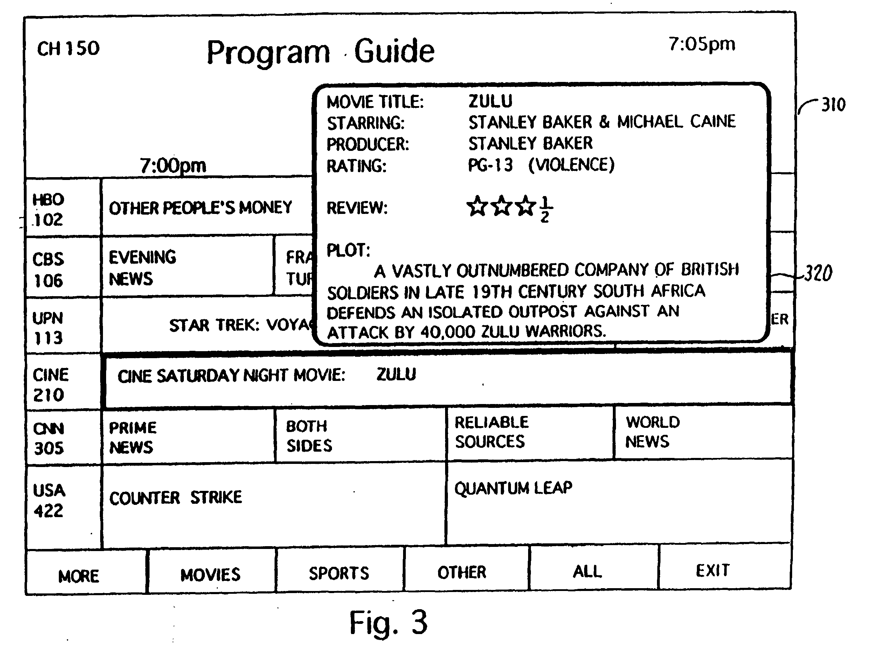

FIGURE 3 shows a Program Guide screen 310, including an auxiliary information display 320. The text of auxiliary display 320 includes the search terms "ZULU" and "MICHAEL CAINE" in the program description. This text will be searched by the GOPHER PROGRAM and the search will come to a successful conclusion. Note that a search of "ZULU" and "STANLEY BAKER" would have been equally successful. It is important to note that not only is the Program Guide text, but also the auxiliary information associated with the television programs, is being searched.

As noted above, the channel guide data used by the controller of the subject apparatus to form the above-described interactive or confirmation sentences may be received from a satellite television communication system. FIGURE 4 shows such a satellite television communication system in which, a satellite 400S receives a signal representing audio, video, or data information from an earth-based transmitter 400T. The satellite amplifies and rebroadcasts this signal to a plurality of receivers 400R, located at the residences of consumers, via transponders operating at specified frequencies and having given bandwidths. Such a system includes an uplink transmitting portion (earth to satellite), an earth-orbiting satellite receiving and transmitting unit, and a downlink portion (satellite to earth) including a receiver located at the user's residence.

In such a satellite system, the information necessary to select a given television program is not fixedly-programmed into each receiver but rather is down-loaded from the satellite continually on each transponder. The television program selection information comprises a set of data known as a Master Program Guide (MPG), which relates television program titles, their start and end times, a virtual channel number to be displayed to the user, and information allocating virtual channels to transponder frequencies and to a position in the time-multiplexed data stream transmitted by a particular transponder. In such a system, it is not possible to tune any channel until the first master program guide is received from the satellite, because the receiver (IRD, or Integrated Receiver Decoder) literally does not know where any channel is located, in terms of frequency and position (i.e. data time slot) within the data stream of any transponder.

A master program guide is preferably transmitted on all transponders with the television program video and audio data, and is repeated periodically, for example, every 2 seconds. The master program guide, once received, is maintained in a memory unit in the receiver, and updated periodically, for example every 30 minutes. Retention of the master program guide allows instantaneous television program selection because the necessary selection data are always available. If the master program guide were to be discarded after using it to select a television program, then a delay of at least two seconds would be incurred while a new program guide was acquired, before any further television program selections could be performed.

Once the channel transponder carrying a desired television program is tuned, the data packets containing the audio and video information for that program can be selected from the data stream received from the transponder by examining the data packets for the proper SCID (Service Component Identifier) 12 bit code. If the SCID of the currently received data packet matches the SCID of the desired television program as listed in the program guide, then the data packet is routed to the proper data processing sections of the receiver. If the SCID of a particular packet does not match the SCID of the desired television program as listed in the program guide, then that data packet is discarded.

A brief description of system hardware, suitable for implementing the above-described invention, now follows. In FIGURE 4, a transmitter 400T processes a data signal from a source 401 (e.g., a television signal source) and transmits it to a satellite 400S which receives and rebroadcasts the signal to a receiving antenna 400A which applies the signal to a receiver 400R. Transmitter 400T includes an encoder 410T, a modulator (i.e., modulator/forward error corrector (FEC)) 420T, and an uplink unit 430T. Encoder 410T compresses and encodes signals from source 401 according to a predetermined standard such as MPEG. MPEG is an international standard developed by the Moving Picture Expert Group of the International Standards Organization for coded representation of moving pictures and associated audio stored on digital storage medium. An encoded signal from unit 410T is supplied to modulator/Forward Error Corrector (FEC) 420T, which encodes the signal with error correction data, and Quaternary Phase Shift Key (QPSK) modulates the encoded signal onto a carrier.

Uplink unit 430T transmits the compressed and encoded signal to satellite 400S, which broadcasts the signal to a selected geographic reception area. The signal from satellite 400S is received by an antenna dish 400A coupled to an input of a so-called set-top receiver 400R (i.e., an interface device situated atop a television receiver). Receiver 400R includes a demodulator (demodulator/Forward Error Correction (FEC) decoder) 410R to demodulate the signal and to decode the error correction data, an IR receiver 412 for receiving IR remote control commands, a microprocessor 415R, which operates interactively with demodulator/FEC unit 410R, and a transport unit 420R to transport the signal to an appropriate decoder 430R within unit 400R depending on the content of the signal, i.e., audio or video information. An NTSC Encoder 440R encodes the decoded signal to a format suitable for use by signal processing circuits in a standard NTSC consumer VCR 402 and standard NTSC consumer television receiver 403. Microprocessor (or microcontroller, or microcomputer) 415R receives infrared (IR) control signals from remote control unit 450R, and sends control information to VCR 402 via an IR link 418R. Microprocessor 415R also generates the on-screen display (OSD) signals needed for presenting the interactive sentence, or confirmation sentence, to the user. Microprocessor 415R also receives and interprets cursor key X and Y information in order to control the highlighting of user choices in the on-screen displays.

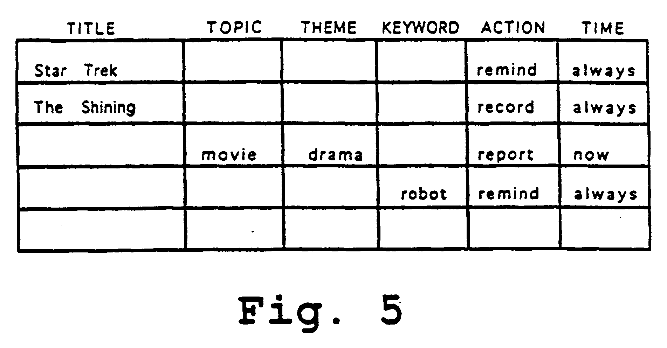

FIGURE 5 shows a search request list which may be displayed as a screen display. In this embodiment of the invention, three actions are possible. First, as noted above, a show may be programmed to be recorded at its next airing without further intervention by the user. Second, as noted above, a reminder can be displayed on-screen that the desired program has been found. Third, a report listing various programs meeting the search criteria and airing in the immediate future (for example, the next three hours) can be prepared and displayed. In the example of FIGURE 5, the user has requested that he be reminded anytime an episode of Star Trek appears in the Program Guide. The user has also requested that the movie "The Shining" be recorded the next time it is found in the guide. The user has also requested that he be reminded anytime the word "robot" appears in the guide or in the program descriptions of the guide. These instructions will run until turned off by the user. The remaining search (i.e., movie, drama, now) is a request which indicates that the user wants to know which dramas are being aired in the immediate future (i.e., within the next three hours). The controller will prepare a report listing all dramatic movies on all channels which are being broadcast in the next few hours. After doing so, this entry will be automatically deleted. It is further envisioned that a user may review and edit or delete search terms in order to modify on-going searches.

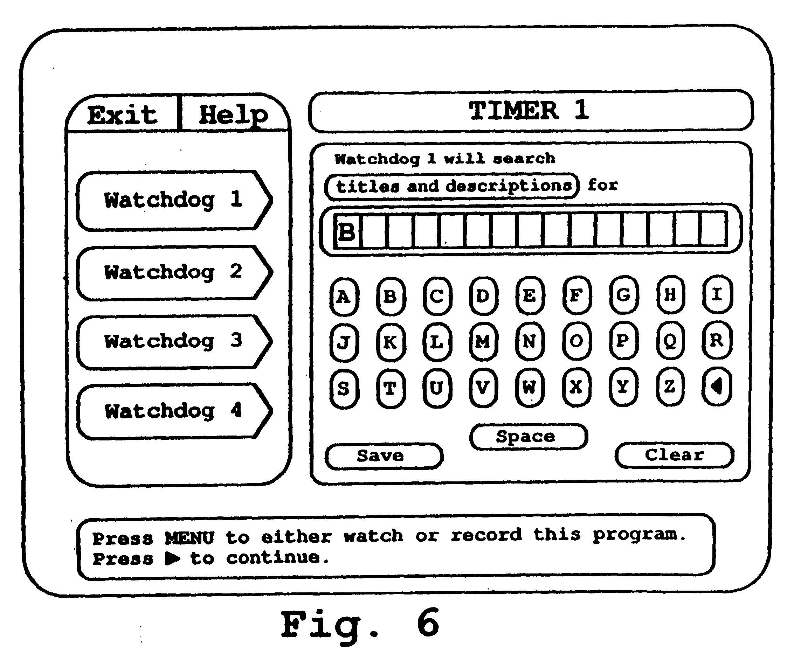

FIGURE 6 shows a screen display of a "virtual keyboard" useful for entering search data. Four "Search Gophers" called "Watchdogs" are programmable for performing simultaneous searches of the Program Guide and auxiliary information data streams. By using the cursor and select keys, a user can "press" one of the watchdog buttons on the left of the screen to select it. He may then use the alphabet keys to enter his search request. (While not explicitly shown, alphanumeric keys are also envisioned). When the user is satisfied with the text of his search request, he may press the Save key to save the search terms for this watchdog search process. If he makes an error, he may delete the error with the clear key.

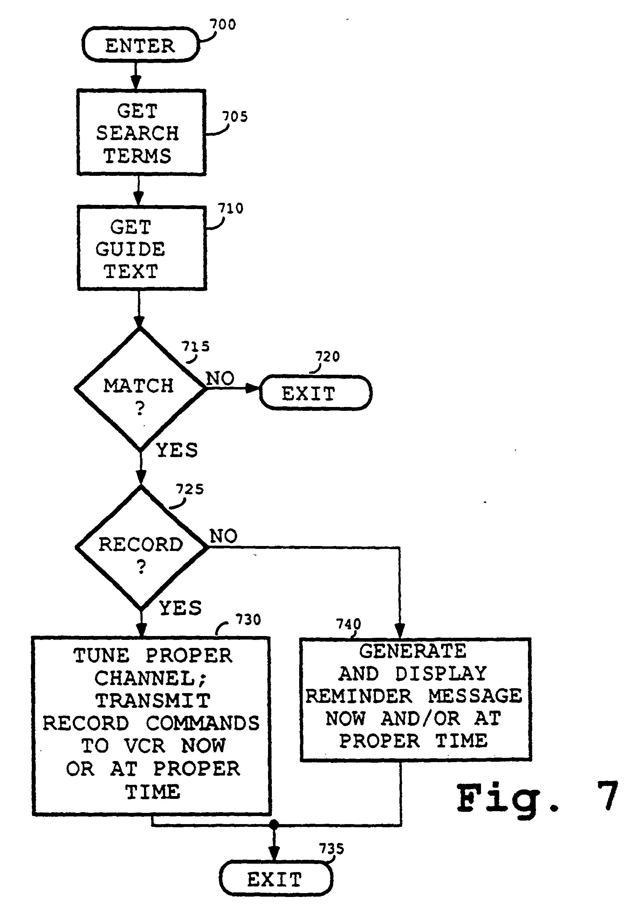

The Gopher program is entered at step 700 of FIGURE 7. At step 705, the search terms are retrieved. At step 710, the Program Guide data is acquired. At step 715 a comparison is made to see if a match exists. If not the program is exited at step 720. If a match does exist, then the user-entered instructions are retrieved. A check is made at step 725 to determine if a record instruction has been entered, if so the routine advances to step 730 at which the record commands are transmitted to the VCR either immediately or at an appropriate later time. The routine is then exited at step 735. If however, a record instruction was not entered then the routine advances to step 740 at which a reminder message is generated for display, either immediately or at an appropriate later time as a "last minute reminder" before the desired show is broadcast, or both. The routine is then exited at step 735.

Although the invention was described with reference to a satellite television system, it is equally applicable to ground based television broadcast systems, both digital and analog.

## Claims

1. A method of using a device within an electronic program guide system for automatically searching program guide information and identifying particular program selections that satisfy criteria provided by a user viewing said program guide comprising:
displaying program guide information ("Program Guide", 310);
entering program guide information search criteria ("HOME", "ZULU AND MICHAEL CAINE");
commencing searching said program guide information, in response to said search criteria, for a program that satisfies said entered search criteria;
identifying a first program ("HOME IMPROVEMENT", "ZULU") that satisfies said entered search criteria; and
indicating to said user said program guide information satisfying said search criteria,
**characterized in that** said method comprises a step of generating said program guide information search criteria in response to a textual string of characters ("HOME", "ZULU", "MICHAEL CAINE") entered by said user.

2. The method of Claim 1 wherein at least part of said search criteria relates to auxiliary information ("MICHAEL CAINE") associated with said displayed program guide information.

3. The method according to Claim 1 or 2, wherein said method comprises continuing searching said program guide information after the step of commencing searching, in response to a user's entry (MENU) for a second program ("HOME AND GARDEN") that satisfies said search criteria.

4. The method of Claim 1 wherein said criteria comprise two separate search criteria ("ZULU", "MICHAEL CAINE") linked together.

5. The method of Claim 4 wherein said separate search criteria are linked together by one of "AND", "OR" and "NOT" logical operators.

6. The method of Claim 5 wherein said separate search criteria relate to one of a title, star, director, topic, theme, and context of a program.

7. The method of any of the preceding Claims wherein said program guide is displayed as a grid format comprising channel information on one axis and time information on another axis, each grid in said format representing a respective program to be shown on a respective channel and a respective time period as indicated by said respective axes.

8. The method of Claim 1 wherein said step of indicating comprises using said program guide ("Program Guide") to indicate said program ("HOME IMPROVEMENT", "HOME AND GARDEN") that satisfies said search criteria ("HOME").

9. The method of Claim 8 wherein said method further comprises the step of displaying said search criteria ("HOME") concurrently with said channel guide.

10. A device (400R) adapted for use within an electronic program guide system for automatically searching program guide information and identifying particular program selections that satisfy criteria provided by a user viewing said program guide comprising:
means for displaying program guide information ("Program Guide", 310);
means for entering program guide information search criteria ("HOME", "ZULU AND MICHAEL CAINE");
means for commencing searching said program guide information, in response to said search criteria, for a program that satisfies said entered search criteria;
means for identifying a first program ("HOME IMPROVEMENT", "ZULU") that satisfies said entered search criteria; and
means for indicating to said user said program guide information satisfying said search criteria,
**characterized in that** said device comprises means for generating said program guide information search criteria in response to a textual string of characters ("HOME", "ZULU", "MICHAEL CAINE") entered by said user,
said device being preferably intended to execute the method according to any of claims 1 to 9.

11. The device of Claim 10 wherein at least part of said search criteria relates to auxiliary information ("MICHAEL CAINE") associated with said displayed program guide information.

## Patentansprüche

1. Verfahren zur Anwendung eines Geräts in einem elektronischen Programmführersystem zur automatischen Suche von Programmführerinformationen und Identifizierung von bestimmten Programmwahlen, die Kriterien erfüllen, die von einem den Programmführer betrachtenden Benutzer geliefert werden, mit:
Wiedergabe der Programmführerinformationen ("Program Guide", 310),
Eingabe von Suchkriterien für Programmführerinformationen ("HOME", "ZULU AND MICHAEL CAINE")
Beginn des Suchens der Programmführerinformationen aufgrund der Suchkriterien für ein Programm, das die eingegebenen Suchkriterien erfüllt,
Identifizierung eines ersten Programms ("HOME IMPROVEMENT", "ZULU"), das die eingegebenen Suchkriterien erfüllt, und
Anzeige der Programmführerinformationen zu dem Benutzer, die diese Suchkriterien erfüllen,
**gekennzeichnet durch**
einen Schritt zur Erzeugung der Suchkriterien für die Programmführerinformationen aufgrund einer Textreihe von **durch** den Benutzer eingegebenen Zeichen ("HOME", "ZULU", "MICHAEL CAINE").

2. Verfahren nach Anspruch 1, wobei wenigstens ein Teil der Suchkriterien die Zusatzinformationen ("MICHAEL CAINE") für die wiedergegebenen Programmführerinformationen betrifft.

3. Verfahren nach Anspruch 1 oder 2, wobei das Verfahren die Fortsetzung der Suche nach dem Programmführerinformationen enthält nach dem Schritt des Beginns des Suchvorgangs aufgrund einer Benutzereingabe (MENU) für ein zweites Programm ("HOME AND GARDEN"), das diese Suchkriterien erfüllt.

4. Verfahren nach Anspruch 1, wobei die Kriterien zwei getrennte, miteinander verbundene Suchkriterien ("ZULU", "MICHAEL CAINE") enthält.

5. Verfahren nach Anspruch 4, wobei die getrennten Suchkriterien durch eine der logischen Operatoren "AND", "OR" und "NOT" miteinander verbunden sind.

6. Verfahren nach Anspruch 5, wobei die getrennten Suchkriterien sich auf einen Titel, Hauptdarsteller, Regisseur, Programmart, Thema und Kontext eines Programms beziehen.

7. Verfahren nach einem der vorangehenden Ansprüche, wobei der Programmführer als ein Gitterformat mit Kanalinformationen auf einer Achse und Zeitinformationen auf einer anderen Achse wiedergegeben wird und jedes Gitter in dem Format jeweils ein Programm darstellt, das auf einem entsprechenden Kanal und einer entsprechenden Zeitperiode gezeigt wird, wie sie durch die jeweiligen Achsen gezeigt werden.

8. Verfahren nach Anspruch 1, wobei der Schritt zur Anzeige die Anwendung des Programmführers ("Program Guide") enthält zur Anzeige des Programms ("HOME IMPROVEMENT", "HOME AND GARDEN"), das diese Kriterien ("HOME") erfüllt.

9. Verfahren nach Anspruch 8, wobei das Verfahren außerdem den Schritt der Wiedergabe der Suchkriterien ("HOME") gleichzeitig mit dem Kanalführer enthält.

10. Gerät (400R) zur Anwendung in einem elektronischen Programmführersystem zur automatischen Suche der Programmführerinformationen und Identifizierung bestimmter Programmbahnen, die die Kriterien erfüllen, die von einem den Programmführer betrachtenden Benutzer geliefert werden:
Mittel zur Wiedergabe von Programmführerinformationen ("Program Guide", 310)
Mittel zur Eingabe von Programmführer-Informations-Suchkriterien ("HOME", "ZULU AND MICHAEL CAINE")
Mittel für den Beginn der Suche nach den Programmführerinformationen aufgrund der Suchkriterien für ein Programm, das die eingegebenen Suchkriterien erfüllt,
Mittel zur Identifizierung eines ersten Programms ("HOME IMPROVEMENT", "ZULU"), das die eingegebenen Suchkriterien erfüllt, und
Mittel zur Anzeige der Programmführerinformationen zu dem Benutzer, die diese Suchkriterien erfüllen,
**dadurch gekennzeichnet, dass**
das Gerät Mittel enthält zur Erzeugung der Programmführer-Informations-Suchkriterien aufgrund einer Textzeile der durch den Benutzer eingegebenen Schriftzeichen ("HOME", "ZULU", "MICHAEL CAINE"),
und das Gerät vorzugsweise zur Durchführung des Verfahrens nach einem der Ansprüche 1 bis 9 dient.

11. Gerät nach Anspruch 10, wobei wenigstens ein Teil der Suchkriterien sich auf die Zusatzinformationen ("MICHAEL CAINE") für die wiedergegebenen Programmführerinformationen bezieht.

## Revendications

1. Procédé d'utilisation d'un dispositif dans le cadre d'un système électronique de guide de programmes pour rechercher automatiquement des informations d'un guide de programmes et identifier des sélections de programmes particuliers qui satisfont des critères fournis par un utilisateur qui consulte ledit guide de programmes comportant les étapes suivantes :
visualisation des informations du guide de programmes (« Guide de programmes », 310) ;
entrée de critères de recherche dans les informations du guide de programmes (« MAISON », « ZOULOUS ET MICHAEL CAINE ») ;
lancement de la recherche dans les informations dudit guide de programmes, en réponse auxdits critères de recherche, d'un programme qui satisfait lesdits critères de recherche entrés ;
identification d'un premier programme (« AMELIORATION DE LA MAISON », « ZOULOUS ») qui satisfait lesdits critères de recherche entrés ; et
indication audit utilisateur desdites informations du guide de programmes qui satisfont lesdits critères de recherche,
**caractérisé en ce que** ledit procédé comporte une étape de génération desdits critères de recherche dans lesdites informations de guide de programmes en réponse à une chaîne textuelle de caractères (« MAISON », « ZOULOUS », « MICHAEL CAINE ») entrée par ledit utilisateur.

2. Procédé selon la revendication 1, dans lequel au moins une partie desdits critères de recherche concernent des informations auxiliaires (« MICHAEL CAINE ») associées auxdites informations du guide de programmes affichées.

3. Procédé selon la revendication 1 ou 2, dans lequel ledit procédé comporte une étape de poursuite de la recherche d'informations du guide de programmes après l'étape de lancement de la recherche, en réponse à une entrée effectuée par l'utilisateur (MENU) relative à un deuxième programme (« MAISON ET JARDIN ») qui satisfait lesdits critères de recherche.

4. Procédé selon la revendication 1, dans lequel lesdits critères comportent deux critères de recherche séparés (« ZOULOUS », « MICHAEL CAINE ») reliés entre eux.

5. Procédé selon la revendication 4, dans lequel lesdits critères de recherche séparés sont reliés entre eux par un des opérateurs logiques « ET », « OU » et « NON ».

6. Procédé selon la revendication 5, dans lequel lesdits critères de recherche séparés concernent l'un des éléments suivants : titre, vedette, metteur en scène, genre, thème, et contexte d'un programme.

7. Procédé selon l'une quelconque des revendications précédentes, dans lequel ledit guide de programmes est visualisé sous forme de grille comportant les informations relatives aux canaux sur un axe et les informations temporelles sur un autre axe, chaque grille dans ledit format représentant un programme respectif qui doit être diffusé sur un canal respectif à un moment respectif selon les indications données par lesdits axes respectifs.

8. Procédé selon la revendication 1, dans lequel ladite étape d'indication comporte l'utilisation dudit guide de programmes (« Guide de programmes ») pour indiquer ledit programme (« AMELIORATION DE LA MAISON », « MAISON ET JARDIN ») qui satisfait ledit critère de recherche (« MAISON »).

9. Procédé selon la revendication 8, dans lequel ledit procédé comporte en outre l'étape de visualisation desdits critère de recherche (« MAISON ») en même temps que ledit guide de canaux.

10. Dispositif (400R), conçu pour être utilisé dans le cadre d'un système électronique de guide de programmes, de recherche automatique d'informations dans un guide de programmes et d'identification de sélections de programmes particuliers qui satisfont des critères fournis par un utilisateur qui consulte ledit guide de programmes, comportant les moyens suivants :
un moyen de visualisation des informations du guide de programmes (« Guide de programmes », 310) ;
un moyen d'entrée de critères de recherche dans les informations du guide de programmes (« MAISON », « ZOULOUS ET MICHAEL CAINE ») ;
un moyen de lancement de la recherche dans les informations dudit guide de programmes, en réponse auxdits critères de recherche, d'un programme qui satisfait lesdits critères de recherche entrés ;
un moyen d'identification d'un premier programme (« AMELIORATION DE LA MAISON », « ZOULOUS ») qui satisfait lesdits critères de recherche entrés ; et
un moyen d'indication audit utilisateur desdites informations du guide de programmes qui satisfont lesdits critères de recherche,
**caractérisé en ce que** ledit dispositif comporte un moyen de génération desdits critères de recherche dans lesdites informations de guide de programmes en réponse à une chaîne textuelle de caractères (« MAISON », « ZOULOUS », « MICHAEL CAINE ») entrée par ledit utilisateur,
ledit dispositif étant de préférence destiné à mettre en oeuvre le procédé défini par les revendications 1 à 9.

11. Dispositif selon la revendication 10, dans lequel au moins une partie desdits critères de recherche concerne des informations auxiliaires (« MICHAEL CAINE ») associées auxdites informations du guide de programmes affichées.
